# EUROPÄISCHE PATENTSCHRIFT

(11) **EP 1 244 280 B1**
(45) Veröffentlichungstag und Bekanntmachung des Hinweises auf die Patenterteilung: **19.01.2005**
(21) Anmeldenummer: 01122064.7
(22) Anmeldetag: 14.09.2001
(51) Int. Cl.: H04M 1/65, G06F 3/16

(54) **Multifunktionsadapter und System zum Aufzeichnen von Telefongesprächen**
Multifunctional adaptor and system for recording telephone conversations
Adaptateur multifunctionnel et système pour l'enregistrement de conversations téléphoniques

(30) Priorität: 20.03.2001 EP 01106905
(43) Veröffentlichungstag der Anmeldung: 25.09.2002
(73) Patentinhaber: SNT Deutschland AG, 60323 Frankfurt am Main (DE)
(72) Erfinder: Knoll, Stefan M., Dr., 12203 Berlin (DE); Vogel, Philipp J.N., 60596 Frankfurt am Main (DE); Artelt, Andreas, 63075 Offenbach (DE)
(74) Vertreter: KEIL & SCHAAFHAUSEN

(56) Entgegenhaltungen:
- US-A- 5 454 036
- US-A- 5 867 575

## Beschreibung

Die Erfindung betrifft einen Multifunktionsadapter zum Anschließen von Mikrofon und Lautsprecher an ein Telefon und Systeme zum Aufzeichnen von Telefongesprächen.

Geräte zum Aufzeichnen von Telefongesprächen sind bekannt. Sie sind bspw. in einen Anrufbeantworter integriert und werden parallel zum Telefon in eine Anschlussbuchse am externen Telefonanschluss eingesteckt. Neben der Funktion eines Anrufbeantworters, der einen ankommenden Anruf beantwortet, wenn das Telefon nach mehrmaligem Klingeln nicht abgehoben wird, bieten viele Geräte auch die Möglichkeit, das Telefongespräch mitzuschneiden. Das Telefongespräch wird dann analog oder digital auf Band aufgezeichnet und kann durch Betätigen einer Wiedergabetaste abgespielt werden.

Die US 5,454,036 beschreibt ein Mitteilungssystem mit einer Einrichtung zum Aufnehmen und Abspielen von Tonnachrichten, welches in Serie zwischen einen Telefonapparat und einen Telefonhörer geschaltet ist. Die elektrische Adapter-Schaltung zur Verbindung von Telefonapparat, Telefonhörer und Aufnahmeund Abspieleinrichtung weist für jeden Anschluss jeweils einen Eingang und einen Ausgang auf. Dabei ist der Lautsprechereingang von dem Höreranschluss des Telefons mit dem Mikrofoneingang von dem Telefonhörer und dem Ausgang der Aufnahmeeinrichtung verbunden. Diese Anschlüsse werden sowohl dem Lautsprechereingang des Telefonhörers als auch dem Eingang der Aufnahmeeinrichtung zugeführt. Das Mikrofonsignal des Telefonhörers wird nach Beimischung zu dem Lautsprechersignal von dem Telefon sowohl der Aufnahmeeinrichtung als auch der Mikrofonanschluss des Höreranschlusses am Telefon zugeführt. Vor dem Mikrofonanschluss findet eine weitere Vermischung des direkt von dem Telefonhörer zugeführten Mikrofonsignals und des Ausgangssignals der Aufnahme- und Abspieleinrichtung statt. Aufgrund der Vermischung sämtlicher Lautsprecher- und Mikrofonsignale in der Adapter-Schaltung zwischen Telefonapparat, Telefonhörer und Aufnahme- und Abspieleinrichtung ist es bei der gezeigten Schaltung nicht möglich, selektiv nur eine Gesprächsrichtung aufzunehmen, da sowohl die von außen eingehende Gesprächsrichtung als auch die nach außen führende Gesprächsrichtung in einem Differenzverstärker gemischt und von dort aus zusammen dem Eingang der Aufnahmeeinrichtung zugeführt werden. Ferner beschreibt die US 5,867,575 eine ähnliche Schaltung, welche zwischen einem Telefonanschluss und einem Telefongerät angeordnet wird. Diese Zwischenschaltung kann an eine Soundkarte eines Computers angeschlossen werden, um die Funktionalität eines Telefons zu erreichen und weitere Funktionen, wie bspw. eine Hintergrundmusik oder eine Stimmenerkennung, zu implementieren.

Auch dabei besteht jedoch der Nachteil, dass automatisch beide Gesprächsrichtungen, d.h. sowohl die Stimme des Angerufenen als auch die des Anrufers aufgezeichnet werden. Da die Gesprächsaufzeichnung grundsätzlich der vorherigen Zustimmung des Betroffenen bedarf, dürfen derartige Geräte immer dann nicht eingesetzt werden, wenn eine Zustimmung nicht vorliegt. In Call-Centern hat der angerufene Kunde in der Regel im Vorhinein keine Zustimmung zur Gesprächsaufzeichnung gegeben. Eine Anfrage zu Beginn des Telefongesprächs dürfte aber die Akzeptanz deutlich verschlechtern, so dass der Kunde gegebenenfalls gar nicht mehr bereit ist, mit dem Telefonberater zu sprechen. Sobald der Kunde personengebundene Daten mitteilt, darf aus Datenschutzgründen sein Gesprächsteil sogar nur aufgezeichnet werden, wenn eine schriftliche Zustimmung vorliegt. Dies lässt sich im aktiven Telefonmarketing überhaupt nicht mehr realisieren. Eine Auswertung des Gesprächs ist somit nur anhand der schriftlichen Aufzeichnungen des Call-Center-Mitarbeiters möglich.

Es ist daher Aufgabe der vorliegenden Erfindung, eine Möglichkeit zum Aufzeichnen von Telefongesprächen zu schaffen, mit der zuverlässig nur eine Gesprächsrichtung aufgezeichnet werden kann.

Dies wird erfindungsgemäß durch einen Multifunktionsadapter der eingangs genannten Art mit den Merkmalen des Anspruchs 1 gelöst, wobei der Multifunktionsadapter einen Telefonanschluss mit einem Lautsprechereingang und einem Mikrofonausgang zur Verbindung mit dem Hörerausgang des Telefons, einen Höreranschluss mit einem Lautsprecherausgang und einem Mikrofoneingang zur Verbindung mit einem einen Lautsprecher und ein Mikrofon aufweisenden Telefonhörer, insbesondere einem Headset, und einen weiteren Geräteanschluss mit einem Signalausgang und einem Signaleingang insbesondere zur Verbindung mit einem Aufnahmegerät aufweist, wobei der Signalausgang mit dem Mikrofoneingang des Höreranschlusses und der Signaleingang mit dem Mikrofonausgang des Telefonanschlusses verbunden ist.

Durch diesen Multifunktionsadapter wird nach entsprechendem Anschluss an Telefon, Telefonhörer/ Headset und Aufnahmegerät das Signal des Mikrofons zunächst dem Aufnahmegerät zugeleitet und erst dann über einen Ausgang des Aufnahmegerätes dem Mikrofoneingang des Telefons zugeführt. Hierdurch wird erreicht, dass nur die mit dem Mikrofon des Telefonhörers aufgezeichneten Gesprächsteile mit dem Aufnahmegerät aufgenommen werden. Die Gesprächsteile der Gegenseite werden so mit Sicherheit nicht aufgenommen. Ferner stellt der Multifunktionsadapter sicher, dass nur dann telefoniert werden kann, wenn die Verbindungskabel zwischen Telefon, Telefonhörer/ Headset und Aufnahmegerät richtig eingesteckt sind, da das Mikrofonsignal nur durch das Aufnahmegerät dem Mikrofoneingang des Telefons zugeleitet wird. Wenn durch Herausziehen von Kabeln die Gesprächsaufnahme verhindert werden soll, kann gleichzeitig auch nicht mehr telefoniert werden.

Um störungsfreie Aufnahmen zu erreichen, arbeitet der Multifunktionsadapter mit einem Signalverstärker, der zwischen dem Mikrofoneingang und dem Signalausgang des Adapters vorgesehen ist und das Mikrofonsignal auf den für das Aufnahmegerät notwendigen Pegel anhebt. Die optimale Funktion des Aufnahmegerätes ist deswegen besonders wichtig, weil das Mikrofonsignal durch das Aufnahmegerät dem Telefon zugeleitet wird.

Ist zwischen dem Lautsprechereingang und dem Lautsprecherausgang ein Kopfhörerverstärker vorgesehen, so kann auf die herkömmlicherweise separaten Headsetverstärker verzichtet werden.

Erfindungsgemäß ist zwischen dem Signaleingang und dem Mikrofonausgang ein elektromagnetischer Niederfrequenzübertrager vorgesehen, durch den das Telefon und das Aufnahmegerät galvanisch getrennt werden. Telefon und Aufnahmegerät sind so elektrisch voneinander getrennt, um das Übergreifen elektrischer Störungen von einem Gerät auf das andere zu vermeiden.

Ferner können der Signalausgang und der Signaleingang des Multifunktionsadapters beispielsweise mittels Jumper oder einer Software-Lösung überbrückbar sein, so dass auch ohne Aufnahmegerät telefoniert werden kann.

In dem Multifunktionsadapter kann erfindungsgemäß ein zweiter Signalausgang vorgesehen sein, der über eine Verzweigung mit dem Lautsprechereingang des Telefonanschlusses verbunden ist. Dadurch besteht bei Bedarf die Möglichkeit, auch die Gesprächsteile der Gegenseite der Aufnahme beizumischen, um in besonderen Fällen das komplette Telefonat aufnehmen zu können. Diese Option lässt sich entweder durch Veränderung der Hardware (Stecken eines Verbindungskabels von dem Multifunktionsadapter zu einem zweiten Eingang des Aufnahmegerätes) und/oder durch Software-Lösungen ein- und ausschalten.

Um auch hier eine galvanische Trennung zwischen Telefon und Aufnahmegerät zu erreichen, ist gemäß der vorliegenden Erfindung vorzugsweise zwischen der Verzweigung und dem zweiten Signalausgang des Multifunktionsadapters ein elektromagnetischer Niederfrequenzübertrager vorgesehen.

Erfindungsgemäß kann der Multifunktionsadapter eine Steuereinheit zur Steuerung von Adapterfunktionen und einen Steueranschluss zur Eingabe von Steuerungsbefehlen aufweisen, um Änderungen in den Adapterfunktionen softwaregesteuert insbesondere über einen Computer vornehmen zu können. Die Softwaresteuerung der Aufnahmekanäle erfolgt jedoch im allgemeinen im Aufnahmegerät.

Ferner betrifft die vorliegende Erfindung ein System zum Aufzeichnen von Telefongesprächen mit einem Telefon mit Hörerausgang, dem zuvor beschriebenen Multifunktionsadapter, einem Telefonhörer, insbesondere einem Headset, und einem Aufnahmegerät mit einem Aufzeichnungseingang und einem Aufzeichnungsausgang, wobei das über den Aufzeichnungseingang empfangene Signal aufgezeichnet und über den Aufzeichnungsausgang wieder ausgegeben wird. Hierbei wird das Mikrofonsignal also durch das Aufnahmegerät hindurch dem externen Telefonanschluss zugeführt.

Um neben dem ausgehenden Mikrofonsignal auch das eingehende Lautsprechersignal, d.h. den Gesprächsteil der Gegenseite, aufnehmen zu können, weist das Aufnahmegerät erfindungsgemäß einen zweiten Aufzeichnungseingang auf.

In einer besonders bevorzugten Ausführungsform der vorliegenden Erfindung ist das Aufnahmegerät ein Computer mit einer Soundkarte, wobei der Aufzeichnungseingang der Line-In-Eingang der Soundkarte, der Aufzeichnungsausgang der Line-Out-Ausgang der Soundkarte und der zweite Aufzeichnungseingang der Mikrofon-Eingang der Soundkarte ist. Damit lassen sich sowohl Einwegeals auch Zweiwege-Gesprächsaufzeichnungslösungen mit kostengünstigen Standard-PC's mit herkömmlichen Soundkarten realisieren.

Die Computer und/oder Aufnahmegeräte sind erfindungsgemäß mit einem extemen Datennetz verbindbar. Damit können insbesondere die gespeicherten Sprachdaten einfach abgerufen werden. Ferner ist es durch Vernetzung mit anderen Systemen zur Aufzeichnung von Telefongesprächen, beispielsweise im Internet, möglich, auf sämtliche Sprachdaten zentral von einem Computer zuzugreifen. Dabei kann jedem aufgezeichneten Gespräch ein Ergebnisschlüssel zugeordnet werden, um die Gespräche im Nachhinein auf der Grundlage der Ergebnisschlüssel abrufen und auswerten zu können.

Nachfolgend wird die vorliegende Erfindung anhand von Ausführungsbeispielen und der Zeichnung näher beschrieben. Dabei ergeben sich weitere Merkmale und Vorteile der Erfindung, die unabhängig von den Ansprüchen und deren Rückbezug Teil der Erfindung sind.

Es zeigen:
- Fig. 1: ein System zum Aufzeichnen von Telefongesprächen, bei dem die Gesprächsaufzeichnung zentral an externen Telefonleitungen stattfindet;
- Fig. 2: ein erfindungsgemäßes System zum Aufzeichnen von Telefongesprächen mit einem Multifunktionsadapter und
- Fig. 3: ein schematisches Schaltbild des erfindungsgemäßen Multifunktionsadapters nach Fig. 2.

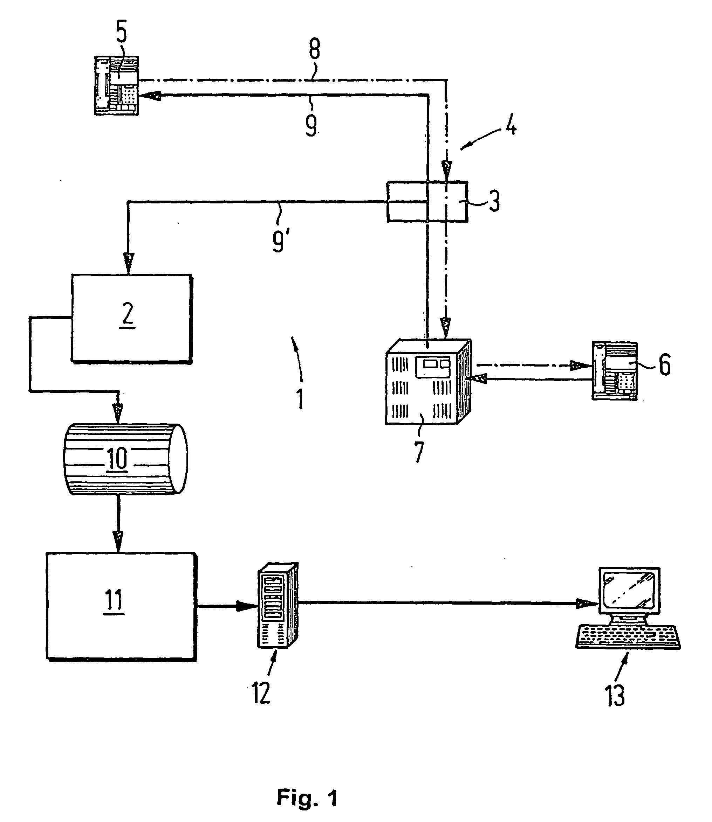

Das in Fig. 1 dargestellte System 1 weist ein Aufnahmegerät 2 auf, an das eine Ankopplungseinheit 3 angeschlossen ist, die einen externen Telefonanschluss 4 mit dem Aufnahmegerät 2 verbindet. Über den Telefonanschluss 4 und ein übliches Leitungs- oder Funknetz werden Telefone 5 und 6 verbunden, wobei das Telefon 6 an eine Telefonanlage 7 bspw. eines Call-Centers angeschlossen ist, die intern mehrere Telefone 6 verwalten kann.

Der Telefonanschluss 4 weist Leitungen 8 für die erste Gesprächsrichtung (ankommende Gesprächsrichtung, Stimme des angerufenen Kunden) und Leitungen 9 für die zweite Gesprächsrichtung (abgehende Gesprächsrichtung, Stimme des Call-Center-Mitarbeiters) auf, die bspw. als digitale Kanäle einer Telefonleitung nebeneinander verlaufen. Am Telefonanschluss 4 wird die Ankopplungseinheit 3 an die Leitungen 8, 9 angeschlossen. In der Ankopplungseinheit 3 befindet sich ein nicht dargestellter Filter, der nur an der abgehenden Leitung 9 angreift. Dieser Filter ist als Signalteiler ausgebildet und zweigt von der Leitung 9 eine Leitung 9' ab, so dass die abgehenden Gesprächsteile sowohl über die Leitung 9 als auch über die abgezweigte Leitung 9' übertragen werden. Dabei werden die Signale ggf. verstärkt. Die ankommenden Gesprächsteile auf der Leitung 8 werden dagegen einfach durch die Ankopplungseinheit 3 hindurchgeführt.

Da nur die abgezweigte Leitung 9' mit dem Aufnahmegerät 2 verbunden ist, kann diese auch nur die über die abgezweigte Leitung 9' geführten Gesprächsteile analog oder digital aufzeichnen. Die Ankopplungseinheit 3 kann durch eine Softwarekonfiguration die abgezweigte Leitung 9' wahlweise mit der Leitung 9, der Leitung 8 oder beiden Leitungen 8, 9 verbinden, um die ankommende oder abgehende Gesprächsrichtung bzw. beide Gesprächsrichtungen aufzeichnen zu können.

Die aufgezeichneten Gespräche, von denen im dargestellten Beispiel nur die abgehende Gesprächsrichtung auf Leitung 9 aufgezeichnet wird, werden von dem Aufnahmegerät 2 als Sprachdateien 10 ausgegeben und in einer Speichereinrichtung 11 abgespeichert. Dabei kann das ursprünglich von dem Aufnahmegerät 2 erzeugte Dateiformat, bspw. einem "WAV-Format", in ein anderes Audio-Dateiformat, bspw. ein "MP3-Format", umgewandelt werden, mit dem sich bei hoher Qualität die Größe der Sprachdateien 10 deutlich verringern lässt. Hierdurch wird Speicherplatz gespart.

Die abgespeicherten Sprachdateien 10 können bspw. über eine nicht dargestellte Wiedergabeeinrichtung an dem Aufnahmegerät 2 ausgewählt und abgehört werden. An das Aufnahmegerät 2, insbesondere die Speichereinrichtung 11, ist ein Computer 12 angeschlossen, von dem aus auf die Sprachdateien 10 in der Speichereinrichtung 11 zurückgegriffen werden kann. Es ist auch möglich, das Aufnahmegerät 2 von dem Computer 12 aus zu konfigurieren. Das Gespräch ist mit Ergebnisschlüsseln versehen, auf deren Grundlage das Gespräch später abgerufen wird. Außerdem lässt sich hierdurch eine statistische Auswertung durchführen.

Der Computer 12 ist bspw. über ein externes Netzwerk, wie das Internet, mit einem Anwenderterminal 13 verbunden, so dass ein Anwender von dem Anwenderterminal 13 aus Zugriff auf die abgespeicherten Sprachdateien hat und diese an seinem Anwenderterminal 13 abhören kann. Zur Datensicherheit kann zwischen dem Computer 12 und dem Anwenderterminal 13 eine sog. "Firewall" vorgesehen sein, um unbefugten Zugriff auf die Daten zu verhindern. Ein solcher Anschluss an ein externes Datennetz ist insbesondere bei großen Anwendungen, bspw. Call-Centern, von Interesse, da ein Auftraggeber von seinem Anwenderterminal 13 aus die Gesprächsführung der Telefonberater an den Telefonen 6 überprüfen kann. Die ankommende Gesprächsrichtung mit dem Gesprächsanteil des Kunden wird dabei entsprechend den Datenschutzregeln nicht mit erfasst.

Bei diesem System ist die Ankopplungseinheit einem externen Telefonanschluss zugeordnet und verbindet das Aufnahmegerät mit dem externen Telefonanschluss, wobei die Ankopplungseinheit einen Filter zur Selektion von für eine Gesprächsrichtung verwendeten Übertragungskanälen aufweist und nur die selektierten Übertragungskanäle mit dem Aufnahmegerät verbunden sind. Insbesondere bei Telefonen, die das aufgenommene Mikrofonsignal nicht mit in das Lautsprechersignal einmischen, damit sich der Telefonierende beim Sprechen selber hört, ermöglicht dieses System eine Gesprächsaufzeichnung zentral an den externen Telefonleitungen, so dass nicht viele dezentrale Lösungen an jedem Telefon vorgesehen werden müssen. Allerdings sind technisch aufwendige Filter nötig, um zuverlässig nur eine Gesprächsrichtung herausfiltern zu können. Wenn der externe Telefonanschluss für die verschiedenen Gesprächsrichtungen separate, insbesondere digitale Übertragungskanäle aufweist, kann der Filter einfach als Signalteiler ausgebildet sein, der selektiv an bestimmten Kanälen angreift. Die Übertragungskanäle können vorzugsweise durch Softwarekonfiguration ausgewählt werden, wobei auch ein gleichzeitiges Aufzeichnen beider Gesprächsrichtungen vorgesehen ist.

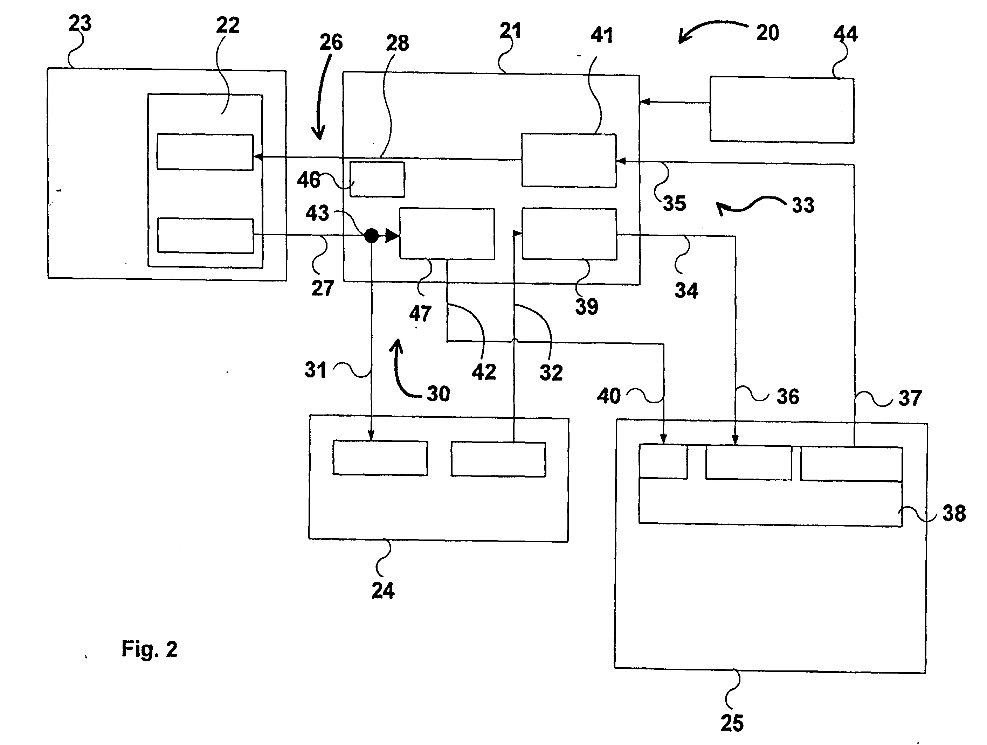

Insbesondere bei Telefonen, die die Mikrofonseite des Telefons in die Lautsprecherseite einmischen, ist eine nachträgliche Trennung zwischen den beiden Gesprächsrichtungen schwierig und technisch sehr aufwendig. Daher wird in diesen Fällen vorzugsweise das nachfolgend beschriebene erfindungsgemäße System 20 zum Aufzeichnen von Telefongesprächen verwendet, das in Fig. 2 dargestellt ist.

Dieses System 20 greift nicht an den Leitungen 8, 9 des externen Telefonanschlusses 4 an, sondern verwendet einen an jedem Telefonplatz vorzusehenden Multifunktionsadapter 21, der zwischen den Hörerausgang 22 eines Telefons 23, den Telefonhörer/ das Headset 24 und ein Aufnahmegerät 25 geschaltet wird. Dazu weist der Multifunktionsadapter 21 einen Telefonanschluss 26 bestehend aus Lautsprechereingang 27 und Mikrofonausgang 28 auf, mit dem der Adapter 21 an den Hörerausgang 22 des Telefons 23 angeschlossen ist. Das Lautsprecher und Mikrofon aufweisende Headset 24 ist mit dem Multifunktionsadapter 21 über einen Höreranschluss 30 mit Lautsprecherausgang 31 und Mikrofoneingang 32 verbunden. Dabei ist der Lautsprechereingang 27 direkt auf den Lautsprecherausgang 31 durchgeschaltet, so dass das von dem Telefon 23 ausgegebene Lautsprechersignal unmittelbar in dem Lautsprecher des Headsets 24 von dem Telefonierenden, bspw. einem Call-Center-Mitarbeiter, gehört werden kann.

Dessen Gesprächsteil wird durch das Mikrofon des Headsets 24 erfasst und als Mikrofonsignal über den Mikrofoneingang 32 dem Multifunktionsadapter 21 zugeleitet. Zur Aufnahme des Mikrofonsignals ist ein als Aufnahmegerät 25 ausgebildeter lokaler Computer über einen weiteren Geräteanschluss 33 mit einem Signalausgang 34 und einem Signaleingang 35 an den Multifunktionsadapter 21 angeschlossen, wobei der Signalausgang 34 mit dem Line-In-Eingang 36 und der Signaleingang 35 mit dem Line-Out-Ausgang 37 einer Soundkarte 38 des Computers 25 verbunden ist. Um mit der Soundkarte 38 befriedigende Aufnahmeergebnisse zu erzielen, wird das Mikrofonsignal in dem Multifunktionsadapter 21 mit einem als Mikrofonvorverstärker ausgebildeten Signalverstärker 39 auf den nötigen Pegel des Line-In-Eingangs 36 der Soundkarte 38 angehoben. Dadurch lassen sich im Vergleich zu einer direkten Aufnahme am Mikrofoneingang 40 der Soundkarte 38 störungsfreiere Aufnahmen erzielen.

Nach dem Eingang des Mikrofonsignals im Line-In-Eingang 36 kann der Gesprächsanteil des Telefonierenden von dem lokalen Computer 25 abgespeichert und das Mikrofonsignal anschließend durch den Line-out-Ausgang 37 über den Signaleingang 35 wieder dem Multifunktionsadapter 21 zugeleitet werden. Der Signaleingang 35 ist über einen elektromagnetischen Niederfrequenzübertrager 41 mit dem Mikrofonausgang 26 verbunden, damit das Mikrofonsignal mit der Antwort des Telefonierenden dem Hörerausgang 22 des Telefons 23 zur externen Übertragung übermittelt wird. Weil das Mirkofonsignal vor der externen Übertragung durch die Soundkarte 38 geleitet wird, sind störungsfreie Aufnahmen besonders wichtig. Eventuelle Störungen durch die Soundkarte 38 oder den Computer 25, bspw. Übersprechen der Kanäle oder Rückkopplungen, wären auf der Gegenseite während des Telefonats zu hören. Das Zwischenschalten des Signalverstärkers 39 und das Nutzen des Line-In-Eingangs 36 der Soundkarte 38 mindert die Störanfälligkeit erheblich.

Der Niederfrequenzübertrager 41 sorgt für eine galvanische Trennung von Telefon 23 und Computer 25, so dass zwischen diesen beiden Geräten keine direkte elektrische Verbindung besteht. Dadurch wird vermieden, dass durch elektrische Störungen des Telefons 23 der Computer 25 oder die Soundkarte 38 Schaden nimmt oder umgekehrt.

Um auch das Lautsprechersignal, d.h. den Gesprächsteil der Gegenseite, aufnehmen zu können, ist ein zweiter Signalausgang 42 vorgesehen, der über eine Verzweigung 43 mit dem Lautsprechereingang 27 des Multifunktionsadapters 21 verbunden ist. Der zweite Signalausgang 42 ist zur Aufnahme des Lautsprechersignals mit dem Mikrofon-Eingang 40 der Soundkarte 38 verbunden. Zur galvanischen Trennung von Telefon 23 und Computer 25 ist auch hier zwischen dem Signalteiler 43 und dem zweiten Signalausgang 42 ein elektromagnetischer Niederfrequenzübertrager 47 vorgesehen.

Zur Stromversorgung des Multifunktionsadapters 21 dient eine externe Gleichspannungsversorgung 44, die eine Spannung vorzugsweise zwischen 5 und 12 Volt liefert. Hierzu wird zweckmäßigerweise ein Adapter zwischen dem PC und der Tastatur oder Maus angeordnet, über den die Spannung abgegriffen wird. Die Funktionsfähigkeit bzw. der Betrieb des Multifunktionsadapters wird mit einer LED 46 angezeigt.

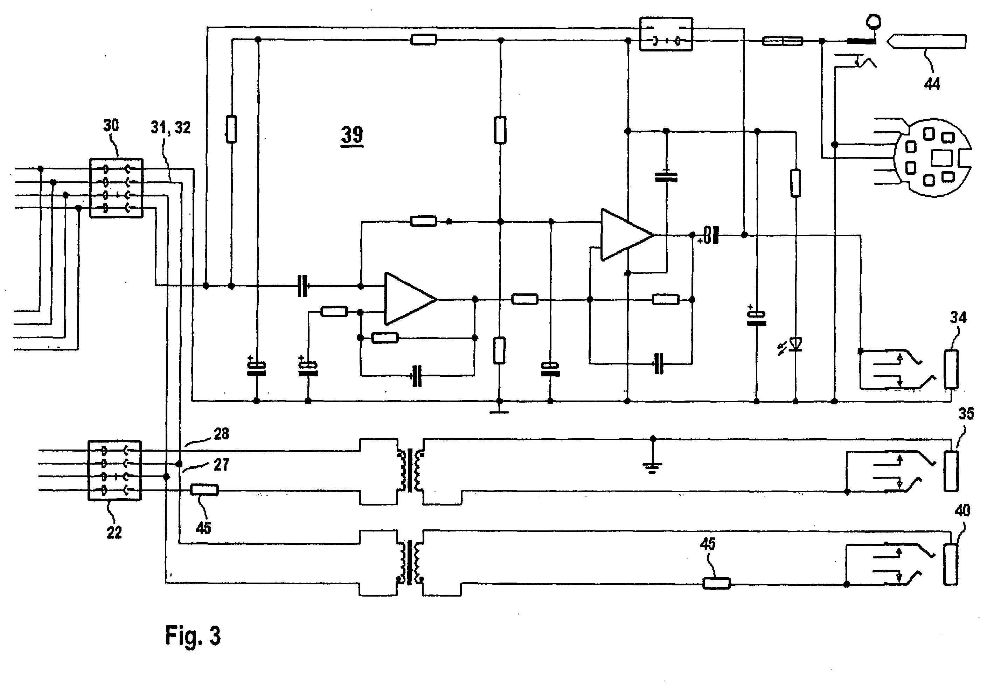

Fig. 3 zeigt einen Teil der elektrischen Schaltung für den Multifunktionsadapter 21 mit dem Signalverstärker 39 zum Verstärken des Mikrofonsignals im Mikrofoneingang 32 sowie die Niederfrequenzübertrager 41, 47 jeweils vor dem Mikrofonausgang 28 bzw. dem zweiten Signalausgang 42 zur galvanische Trennung von Telefon 23 und Computer 25. Die Niederfrequenzübertrager 41 sind mit Vorwiderständen 45 kombiniert, um das Soundkartenausgangssignal am Mikrofonausgang 28 des Multifunktionsadapters 21 an die Pegelhöhe und den Innenwiderstand des Mikrofoneingangs des Telefons 23 und das Lautsprechersignal des Telefons 23 an den Mikrofon-Eingang 40 der Soundkarte 38 anzupassen.

Die Weiterverarbeitung der aufgenommen Sprachsignale erfolgt entsprechend dem in Fig. 1 dargestellten System 1. Die Konfiguration des Systems 20 wird softwaregesteuert vorgenommen, wobei insbesondere zwischen Einwege- und Zweiwegeaufzeichnung umgeschaltet werden kann, indem durch ein Softwaremischpult der Soundkarte 38 der Mikrofon-Eingang 40 dem Line-In-Eingang 36 zugemischt wird oder nicht. Daher können sowohl Einzelplatzlösungen als auch die Ausrüstung von Call-Centern mit mehreren hundert Telefonplätzen und einer vollautomatischen zentralen Steuerung realisiert werden.

Mit dem System 20 ist es möglich, direkt am Mikrofon des Telefonhörers bzw. Headsets 24 über den Line-In-Eingang 36 der Soundkarte 38 eines Computers 25 nur den Gesprächsteil des Telefonierenden aufzunehmen und dann das Signal über den Line-Out-Ausgang 37 und den elektromagnetischen Niederfrequenzübertrager 47 auf den Mikrofoneingang des Telefons 23 auszugeben. Hierdurch wird erreicht, dass nur die Gesprächsteile des Telefonierenden aufgenommen werden, ohne dass es zu Beimischungen des Gesprächsteils der externen Gegenseite kommt. Daher eignet sich das System 20 mit dem Multifunktionsadapter auch besonders für die Einwege-Gesprächsaufzeichnung zur Qualitätssicherung in Call-Centern.

Die beschriebenen Funktionen sind unabhängig davon, ob die Gegenseite aktiv angerufen wird oder ein Anruf entgegengenommen wird.

### Bezugszeichenliste:

- 1: System zum Aufzeichnen von Telefongesprächen
- 2: Aufnahmegerät
- 3: Ankopplungseinheit
- 4: externer Telefonanschluss
- 5,6: Telefone
- 7: Telefonanlage
- 8: Leitungen für die erste Gesprächsrichtung (ankommend)
- 9: Leitungen für die zweite Gesprächsrichtung (abgehend)
- 9': abgezweigte Leitung
- 10: Sprachdateien
- 11: Speichereinrichtung
- 12: Computer
- 13: Anwenderterminal

- 20: System zum Aufzeichnen von Telefongesprächen
- 21: Multifunktionsadapter
- 22: Hörerausgang
- 23: Telefon
- 24: Telefonhörer / Headset
- 25: Aufnahmegerät / Computer
- 26: Telefonanschluss
- 27: Lautsprechereingang
- 28: Mikrofonausgang
- 30: Höreranschluss
- 31: Lautsprecherausgang
- 32: Mikrofoneingang
- 33: Geräteanschluss
- 34: Signalausgang
- 35: Signaleingang
- 36: Aufzeichnungseingang / Line-In-Eingang
- 37: Aufzeichnungsausgang / Line-Out-Ausgang
- 38: Soundkarte
- 39: Signalverstärker
- 40: zweiter Aufzeichnungseingang / Mikrofon-Eingang
- 41: Niederfrequenzübertrager
- 42: zweiter Signalausgang
- 43: Verzweigung
- 44: Gleichspannungsversorgung
- 45: Vorwiderstand
- 46: LED
- 47: Niederfrequenzübertrager

## Patentansprüche

1. Multifunktionsadapter zum Anschließen von Mikrofon und Lautsprecher an ein Telefon (23), wobei der Multifunktionsadapter (21) einen Telefonanschluss (26) mit einem Lautsprechereingang (27) und einem Mikrofonausgang (28) zur Verbindung mit dem Hörerausgang (22) des Telefons (23), einen Höreranschluss (30) mit einem Lautsprecherausgang (31) und einem Mikrofoneingang (32) zur Verbindung mit einem einen Lautsprecher und ein Mikrofon aufweisenden Telefonhörer, insbesondere einem Headset (24), und einen weiteren Geräteanschluss (33) mit einem Signalausgang (34) und einem Signaleingang (35) zur Verbindung mit einem Aufnahmegerät (25) aufweist, wobei der Signalausgang (34) mit dem Mikrofoneingang (32) des Höreranschlusses (30) und der Signaleingang (35) mit dem Mikrofonausgang (28) des Telefonanschlusses (26) verbunden ist, **dadurch gekennzeichnet, dass** der Lautsprechereingang (27) direkt auf den Lautsprecherausgang (31) durchgeschaltet ist und das Mikrofonsignal des Telefonhörers (24) zunächst dem Aufnahmegerät (25) zugeleitet und erst dann über einen Ausgang (37) des Aufnahmegerätes. (25) und den Signaleingang (35) des Multifunktionsadapters (21) dem Mikrofoneingang des Telefons (23) zugeführt wird.

2. Multifunktionsadapter nach Anspruch 1, **dadurch gekennzeichnet, dass** zwischen dem Mikrofoneingang (32) und dem Signalausgang (34) ein Signalverstärker (39) vorgesehen ist.

3. Multifunktionsadapter nach Anspruch 1 oder 2, **dadurch gekennzeichnet, dass** zwischen dem Lautsprechereingang (27) und dem Lautsprecherausgang (31) ein Kopfhörerverstärker vorgesehen ist.

4. Multifunktionsadapter nach einem der vorhergehenden Ansprüche, **dadurch gekennzeichnet, dass** zwischen dem Signaleingang (35) und dem Mikrofonausgang (28) ein Niederfrequenzübertrager (41) vorgesehen ist.

5. Multifunktionsadapter nach einem der vorhergehenden Ansprüche, **dadurch gekennzeichnet, dass** der Signalausgang (34) und der Signaleingang (35) überbrückbar sind.

6. Multifunktionsadapter nach einem der vorhergehenden Ansprüche, **dadurch gekennzeichnet, dass** ein zweiter Signalausgang (42) vorgesehen ist, der über eine Verzweigung (43) mit dem Lautsprechereingang (27) des Telefonanschlusses (26) verbunden ist.

7. Multifunktionsadapter nach Anspruch 6, **dadurch gekennzeichnet, dass** zwischen der Verzweigung (43) und dem zweiten Signalausgang (42) ein Niederfrequenzübertrager (47) vorgesehen ist.

8. Multifunktionsadapter nach einem der vorhergehenden Ansprüche, **gekennzeichnet durch** eine Steuereinheit zur Steuerung von Adapterfunktionen und einen Steueranschluss zur Eingabe von Steuerungsbefehlen.

9. System zum Aufzeichnen von Telefongesprächen mit einem Telefon (23) mit Hörerausgang (22), einem Multifunktionsadapter (21) nach einem der Ansprüche 1 bis 8, einem Telefonhörer, insbesondere einem Headset (24), und einem Aufnahmegerät (25) mit einem Aufzeichnungseingang (36) und einem Aufzeichnungsausgang (37), derart ausgestaltet, dass das über den Aufzeichnungseingang (36) empfangene Signal aufgezeichnet und über den Aufzeichnungsausgang (37) wieder ausgegeben wird.

10. System nach Anspruch 9, **dadurch gekennzeichnet, dass** das Aufnahmegerät (25) einen zweiten Aufzeichnungseingang (40) aufweist.

11. System nach Anspruch 9 oder 10, **dadurch gekennzeichnet, dass** das Aufnahmegerät (25) ein Computer mit einer Soundkarte (38) ist, wobei der Aufzeichnungseingang (36) der Line-In-Eingang der Soundkarte (38), der Aufzeichnungsausgang (37) der Line-Out-Ausgang der Soundkarte (38) und der zweite Aufzeichnungseingang (40) der Mikrofon-Eingang der Soundkarte (38) ist.

12. System nach einem der Ansprüche 9 bis 11, **dadurch gekennzeichnet, dass** das Aufnahmegerät (25) und/oder der Computer mit einem externen Datennetz verbindbar ist, insbesondere zum Abruf von gespeicherten Sprachdaten und zur Vernetzung mit anderen Systemen (20) zur Aufzeichnung von Telefongesprächen.

## Claims

1. A multifunctional adapter for connecting a microphone and a loudspeaker to a telephone (23), wherein the multifunctional adapter (21) comprises a telephone connection (26) to a loudspeaker input (27) and a microphone output (28) for connection with the receiver output (22) of the telephone (23), a receiver connection (30) to a loudspeaker output (31) and a microphone input (32) for connection with a telephone receiver comprising a loudspeaker and a microphone, in particular a headset (24), and an additional device connection (33) to a signal output (34) and a signal input (35) for connection with a recorder (25), wherein the signal output (34) is connected to the microphone input (32) of the receiver connection (30) and the signal input (35) is connected to the microphone output (28) of the telephone connection (26),
**characterised in that** the loudspeaker input (27) is connected directly through to the loudspeaker output (31) and the microphone signal of the telephone receiver (23) is firstly fed to the recorder (25) and only then is it supplied via an output (37) of the recorder (25) and the signal input (35) of the multifunctional adapter (21) to the microphone input of the telephone (23).

2. A multifunctional adapter according to Claim 1,
**characterised in that** a signal amplifier (39) is provided between the microphone input (32) and the signal output (34).

3. A multifunctional adapter according to Claim 1 or 2,
**characterised in that** a headset amplifier is provided between the loudspeaker input (27) and the loudspeaker output (31).

4. A multifunctional adapter according to one of the preceding Claims,
**characterised in that** a low-frequency transformer (41) is provided between the signal input (35) and the microphone output (28).

5. A multifunctional adapter according to one of the preceding Claims,
**characterised in that** the signal output (34) and the signal input (35) can be connected in parallel.

6. A multifunctional adapter according to one of the preceding Claims,
**characterised in that** a second signal output (42) is provided, which is connected via a fork (43) to the loudspeaker input (27) of the telephone connection (26).

7. A multifunctional adapter according to Claim 6,
**characterised in that** a low-frequency transformer (47) is provided between the fork (43) and the second signal output (42).

8. A multifunctional adapter according to one of the preceding Claims,
**characterised by** a control unit for controlling adapter functions and a gate terminal for the input of control commands.

9. A system for recording telephone conversations having a telephone (23) with a receiver output (22), a multifunctional adapter (21) according to one of Claims 1 to 8, a telephone receiver, in particular a headset (24), and a recorder (25) with a recording input (36) and a recording output (27), configured in such a manner that the signal received via the recording input (36) is recorded and is outputted again via the recording output (37).

10. A system according to Claim 9,
**characterised in that** the recorder (25) comprises a second recording input (40).

11. A system according to Claim 9 or 10,
**characterised in that** the recorder (25) is a computer with a sound card (38), with the recording input (36) being the line-in input of the sound card (38), the recording output (37) being the line-out output of the sound card (38) and the second recording input (40) being the microphone input of the sound card (38).

12. A system according to one of Claims 9 to 11,
**characterised in that** the recorder (25) and/or the computer can be connected to an external data network, in particular for retrieving stored speech data and for networking with other systems (20) for recording telephone conversations.

## Revendications

1. Adaptateur multifonctionnel pour raccorder un microphone et un haut-parleur à un téléphone (23), l'adaptateur multifonctionnel (21) étant muni d'un raccord de téléphone (26) avec une entrée pour haut-parleur (27) et une sortie pour microphone (28) pour un raccord à la sortie de combiné (22) du téléphone (23), avec un raccord de combiné (30) avec une sortie de haut-parleur (31) et une entrée de microphone (32) pour le raccord à un combiné téléphonique muni d'un haut-parleur et d'un microphone, notamment à un headset (24), et avec raccord d'appareil supplémentaire (33) présentant une sortie de signal (34) et une entrée de signal (35) pour le raccord à un appareil d'enregistrement (25), la sortie d'enregistrement (34) étant raccordée à l'entrée de microphone (32) du raccord de combiné (30) et l'entrée de signal (35) avec la sortie de microphone (28) du raccord de téléphone (26), **caractérisé en ce que** l'entrée pour haut-parleur (27) est commutée directement sur la sortie pour haut-parleur (31) et le signal de microphone du combiné téléphonique (24) est tout d'abord dirigé vers l'appareil d'enregistrement (25) et n'est qu'ensuite dirigé vers l'entrée de microphone du téléphone (23) par l'intermédiaire d'une sortie (37) de l'appareil d'enregistrement (25) et de l'entrée de signal (35) de l'adaptateur multifonctionnel (21).

2. Adaptateur multifonctionnel selon la revendication 1, **caractérisé en ce qu'**un amplificateur de signal (39) est prévu entre l'entrée de microphone (32) et la sortie de signal (34).

3. Adaptateur multifonctionnel selon la revendication 1 ou 2, **caractérisé en ce qu'**un amplificateur d'écouteur est prévu entre l'entrée de haut-parleur (27) et la sorite de haut-parleur (31).

4. Adaptateur multifonctionnel selon l'une des revendications précédentes, **caractérisé en ce qu'**un transducteur basse fréquence (41) est prévu entre l'entré de signal (35) et la sortie de microphone (28).

5. Adaptateur multifonctionnel selon l'une des revendications précédentes, **caractérisé en ce que** la sortie de signal (34) et l'entrée de signal (35) peuvent être court-circuitées.

6. Adaptateur multifonctionnel selon l'une des revendications précédentes, **caractérisé en ce qu'**il est prévu une deuxième sortie de signal (42) qui est raccordée par l'intermédiaire d'une ramification (43) à l'entrée de haut-parleur (27) du raccord de téléphone (26).

7. Adaptateur multifonctionnel selon la revendication 6, **caractérisé en ce qu'**un transducteur basse fréquence est prévu entre la ramification (43) et la deuxième sortie de signal (42).

8. Adaptateur multifonctionnel selon l'une des revendications précédentes, **caractérisé par** une unité de commande pour commander des fonctions de l'adaptateur et un raccord de commande pour l'entrée d'ordres de commande.

9. Système pour l'enregistrement de conversations téléphoniques avec un téléphone (23) avec une sortie de combiné (22), un adaptateur multifonctionnel (21) selon l'une des revendications 1 à 8, un combiné téléphonique, notamment un headset (24) et un appareil d'enregistrement (25) avec une entrée d'enregistrement (36) et une sortie d'enregistrement (37), équipé de telle sorte que le signal reçu par l'intermédiaire de l'entrée d'enregistrement (36) est enregistré et restitué par l'intermédiaire de la sortie d'enregistrement (37).

10. Système selon la revendication 9, **caractérisé en ce que** l'appareil d'enregistrement (25) est muni d'une deuxième entrée d'enregistrement (40).

11. Système selon la revendication 9 ou 10, **caractérisé en ce que** l'appareil d'enregistrement (25) est un ordinateur avec une carte son (38), l'entrée d'enregistrement (36) étant constituée par l'entrée Line-In de la carte son (38), la sortie d'enregistrement (37) par la sortie Line-Out de la carte son (38) et la deuxième entrée d'enregistrement (40) par l'entrée de microphone de la carte son (38).

12. Système selon l'une des revendications 9 à 11, **caractérisé en ce que** l'appareil d'enregistrement (25) et / ou l'ordinateur peuvent être reliés à un réseau de données extérieur, notamment pour l'appel de données de parole enregistrées et pour mettre en réseau avec d'autres systèmes (20) pour enregistrer des conversations téléphoniques.
